**Europäisches Patentamt**

**European Patent Office**

**Office européen des brevets**

(19)

(11) Veröffentlichungsnummer : **0 076 368**
**B1**

(12) **EUROPÄISCHE PATENTSCHRIFT**

(45) Veröffentlichungstag der Patentschrift :
03.12.86

(51) Int. Cl.⁴ : **C 08 L 33/12, C 09 D 3/80**

(21) Anmeldenummer : **82106637.0**

(22) Anmeldetag : **23.07.82**

(54) **Plastisole aus Copolymerisaten des Methylmethacrylats mit verbesserter Haftfestigkeit und ihre Verwendung.**

(30) Priorität : **01.10.81 DE 3139090**

(43) Veröffentlichungstag der Anmeldung :
**13.04.83 Patentblatt 83/15**

(45) Bekanntmachung des Hinweises auf die Patenterteilung : **03.12.86 Patentblatt 86/49**

(84) Benannte Vertragsstaaten :
**AT CH DE FR GB IT LI SE**

(56) Entgegenhaltungen :
**DE-B- 2 812 015**
**FR-A- 2 291 248**
**FR-A- 2 391 245**

(73) Patentinhaber : **Röhm GmbH**
**Kirschenallee Postfach 4242**
**D-6100 Darmstadt 1 (DE)**

(72) Erfinder : **Quis, Peter, Dr.**
**Pfannmüllerweg 26**
**D-6100 Da.-Neu Kranichstein (DE)**
Erfinder : **Siol, Werner, Dr. Dipl.-Chem.**
**Mühlbergstrasse 4**
**D-6102 Pfungstadt (DE)**
Erfinder : **Büchse, Joachim**
**Ketteler Strasse 13**
**D-6097 Trebur (DE)**
Erfinder : **Rauch, Hubert**
**Odenwaldstrasse 6**
**D-6108 Weiterstadt 1 (DE)**

## Beschreibung

Die Erfindung betrifft Plastisole auf Basis von Copolymerisaten des Methylmethacrylats, die unter anderem verbesserte Haftung auf Kataphoreseblechen zeigen. Plastisole auf Acrylatbasis sind bekannt. In der DE-3-25 29 732 werden Plastisole beansprucht, die aus 100 Gew.-Teilen eines Acrylathomopolymerisats und/oder Copolymerisats mit Methacrylsäureestern von aliphatischen $C_2$- bis $C_{10}$-Alkoholen, Acrylsäureestern von aliphatischen $C_1$- bis $C_{10}$-Alkoholen, Styrol und/oder $\alpha$-Methylstyrol, wobei das Polymerisat und/oder Copolymerisat eine durchschnittliche Korngröße von 0,1 bis 500 µm, eine Glastemperatur Tg oberhalb 35 °C und einen Polymerisationsgrad von mehr als 400 aufweist, 30 bis 1 000 Gew.-Teilen eines mit dem Homo- und/oder Copolymerisat verträglichen organischen Weichmachers, der dem Plastisol einen Viskositätsindex $V_{8/0}$ von weniger als 3,0 verleiht, gegebenenfalls bis zu 700 Gew.-Teilen inerter Füllstoffe sowie gegebenenfalls weiterer üblicher Zusätze bestehen, wobei in das Polymerisat eine untergeordnete Menge an Acrylat- und/oder Methacrylmonomeren mit Hydroxyl-, Epoxy-, Amino- oder freien Carboxylgruppen einpolymerisiert sein kann.

In der genannten DE-B- wird ferner die Einpolymerisation geringer Mengen bestimmter heterocyclischer Verbindungen zur Verbesserung der Hafteigenschaften empfohlen. Als besonders wirksam wird N-Vinylimidazol herausgestellt. Die Haftung der Plastisole kann gemäß der DE-B- noch dadurch weiterverbessert werden, daß man mit der heterocyclischen Gruppe des einpolymerisierten Comonomeren reagierende zusätzliche Vernetzer zufügt. Als geeignet haben sich einmal Epoxidharze erwiesen. Ferner haben sich mehrbasische Carbonsäuren z. B. Benzoltricarbonsäure, Adipinsäure, Maleinsäure und Itaconsäure als geeignete Vernetzer erwiesen, welche eine weitere Verbesserung der Hafteigenschaften bewirken.

Wie die Beispiele ausweisen, ist die Anwesenheit des N-Vinylimidazols in verwendeten Polymerisate unerläßlich, um den Platisolen auf elektrophoretisch grundiertem Blech ausreichende Haftung zu verleihen. Es wird gezeigt, daß mit Methylmethacrylat-Homopolymeren oder Methylmethacrylat/Butylmethacrylat-Copolymeren ohne diesen einpolymerisierten Haftvermittler kein Zugfestigkeitswert erhalten wird. Einem fertigen Plastisol, dessen Polymerkomponente als Haftungsvermittler N-Vinylimidazol einpolymerisiert enthält, können die oben genannten mehrbasischen Carbonsäuren als Vernetzer zugesetzt werden, wobei eine weitere erhebliche Verbesserung der Haftung erreicht wird.

Es hat sich erwiesen, daß die Plastisole des Standes der Technik den praktischen Anforderungen nicht voll gerecht werden. So läßt die Haftung auf Blechen, die vor allem bei der Anwendung im Automobilbau die Grundvoraussetzung darstellt, nach wie vor zu wünschen übrig. Dazu kommt, daß die Herstellung der in der genannten DE-B- besonders bevorzugten Polymerisate in technischem Maßstab auf gewisse Schwierigkeiten stößt, die wahrscheinlich mit der relativ geringen Polymerisationstendenz des N-Vinylimidazols zusammenhängen.

Daher bestand die Aufgabe, Plastisole mit möglichst guten Hafteigenschaften aufzufinden, deren Polymerisatkomponente ohne erhebliche technische Komplikationen zugänglich war, und die sich mit Hilfe gängiger Weichmacher in möglichst einfacher und beherrschbarer Weise herstellen und anwenden ließen.

Das besondere Interesse mußte der Haftung auf Kataphoreseblechen gelten, die insbesondere im Automobilbau mehr und mehr zur Anwendung kommen : Daneben aber auch die Haftung auf Stahl und Aluminium allgemein (gefettet, entfettet, phosphatiert oder grundiert), außerdem auf Textilien usw., wobei die übrigen Qualitäten der Plastisole (Topfzeit, mechanische Eigenschaften, Rheologie, Gelierfähigkeit, Weichmacheraufnahme usw.) nicht beeinträchtigt werden durften.

Es wurde gefunden, daß die oben dargestellte Aufgabe weitgehend gelöst wird, wenn als Polymerisatkomponente des Plastisols ein Copolymerisat des Methylmethacrylats mit 0,1 bis 10 Gew.-% Itaconsäure oder deren Anhydrid aufgebaut ist.

Gegebenenfalls kann die Polymerkomponente der erfindungsgemäßen Plastisole noch stickstoffhaltige, polymerisationsfähige Einheiten z. B. eine polymerisierbare Base wie Vinylpyridin, N,N-Dimethylaminopropylmethacrylat, 3-Dimethylamino-2,2-dimethyl-propyl-1-(meth)-acrylat, Vinylimidazol oder polymerisationsfähige Amide in Anteilen von 0,05 bis 3 Gew.-%, insbesondere 0,1 bis 2 Gew.-%, als Comonomer enthalten. Die Herstellung der Polymerisate kann in an sich bekannter Weise erfolgen, beispielsweise durch Emulsionspolymerisation oder Suspensionspolymerisation. Bei Anwendung der Emulsionspolymerisation kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge — bezogen auf das Polymerisat — 1 Gew.-% nicht überschreiten.

Als Initiator können neben den in der Emulsionspolymerisation üblichen Verbindung, wie z. B. Perverbindungen wie Wasserstoffperoxid, Ammoniumperoxidisulfat (APS) auch Redoxsysteme wie Bisulfit-APS-Eisen sowie Azo-Starter verwendet werden. Die Initiatormenge liegt im allgemeinen bei 0,005 bis 0,5 Gew.-%, bezogen auf das Polymerisat.

Die Polymerisationstemperatur richtet sich innerhalb gewisser Grenzen nach den Initiatoren. So arbeitet man bei Anwendung von APS vorteilhaft im Bereich von 60-90 °C. Bei Einsatz von Redoxsystemen kann auch bei tieferen Temperaturen, beispielsweise bei 30 °C polymerisiert werden. Neben der Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation mit Hilfe von Redox-Initiatoren gestartet. Das Monomer-Wasser-Verhältnis muß dabei der freiwerdenden Reaktionswärme angepaßt werden. In der Regel treten keine Schwierigkeiten auf, wenn man eine 50 %-ige Emulsion so erzeugt, daß man zunächst die Hälfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Hälfte der Monomeren zusammen mit den Hilfsstoffen zusetzt.

Die Gewinnung der Polymerisate in fester Form kann in an sich bekannter Weise durch Sprühtrocknung, Gefriertrocknung oder durch Ausfällen vorgenommen werden. Unter Umständen kann es vorteilhaft sein, die einzelnen Latexteilchen beim Trocknen miteinander zu größeren Einheiten zu verkleben (partielle Verglasung). Als Richtwert für die agglomerierten Einheiten kann man 5-200 μm annehmen.

Die erfindungsgemäß zu verwendenden Polymerisate können auch nach dem Verfahren der Perlpolymerisation hergestellt werden. Dabei können die üblichen Dispergiermittel und die gebräuchlichen Kessel (drucklos oder unter Anwendung von Druck) zur Anwendung kommen (vgl. Houben-Weyl, 4. Auflage, Bd. XIV, Seite 406 ff, und S. 1053 ff, Georg-Thieme-Verlag). Aus Gründen des besseren Anquellens werden Perlpolymerisate mit einem Teilchendurchmesser deutlich kleiner als 100 μm bevorzugt.

Vorzugsweise entsprechen die erfindungsgemäß verwendbaren Polymerisate den in der DE-A-2 454 235 bzw. der DE-A-2 529 732 aufgestellten Kriterien hinsichtlich Korngröße und durchschnittlichem Polymerisationsgrad. Die Glastemperatur liegt vorzugsweise oberhalb 50 °C. Als Weichmacher kommen an sich bekannte Weichmacher, beispielsweise die in den genannten DE-A- infrage. Besonders genannt seien Weichmacher auf der Basis von Phthalsäureestern sowie Polymerweichmacher. Der Weichmacheranteil im Plastisol macht in der Regel das 1- bis 10-fache, vorzugsweise das 1- bis 3-fache, des Gewichts des Polymerisats aus. Ferner kann das Plastisol noch die üblichen Zuschläge, wie anorganische Füllstoffe, Fließhilfsmittel, Thixotropiemittel, Pigmente und äußere Haftvermittler enthalten.

Vorzugsweise werden in den erfindungsgemäßen Plastisolen Weichmacher bzw. Weichmacherkombinationen verwendet, die bei einer Lagerzeit der daraus hergestellten Plastisole über 3 Wochen bei einer Temperatur von 30 °C einen Viskositätsanstieg unter dem zehnfachen, speziell dem fünffachen Wert der Ausgangsviskosität ergeben. Als Weichmacher kommen beispielsweise die einschlägig verwendeten Phthalsäureester, wie Dimethylcyclohexylphthalat, insbesondere Benzyloctylphthalat, sowie Polymerweichmacher wie z. B. Harnstoffweichharze (z. B. PLASTIGEN G der BASF oder URESIN B der Hoechst AG), Polyesterweichmacher u. a., infrage.

Die Herstellung der Plastisole kann in an sich bekannter Weise, z. B. wie folgt vorgenommen werden : Man mischt zunächst die flüssigen Anteile (Weichmacher), rührt in die flüssige Phase das Polymerpulver mit Hilfe eines Rührers ein und bringt dann auf gleiche Weise die Füllstoffe ein. Zur besseren Homogenisierung wird dann der gesamte Ansatz über den Walzenstuhl geführt. Auch die Beschichtung der Untergründe mit den erfindungsgemäßen Plastisolen kann in an sich bekannter Weise vorgenommen werden. Die Adhäsion der mit den erfindungsgemäßen Plastisolen durchgeführten Beschichtungen auf dem Kataphoreseuntergrund ist dabei in der Regel höher als die Filmkohäsion.

Die folgenden Beispiele dienen zur Erläuterung der Erfindung.

Beispiele

1. Herstellung einer Polymerisat-Dispersion

In einem Witt'schen Topf mit Rückflußkühler, Rührwerk und Zulaufgefäß werden bei 80 °C 0,35 g Ammoniumperoxydisulfat und 0,70 g des Natrium-Salzes eines $C_{15}$-Paraffinsulfats in 1 400 g dest. Wasser gelöst. In diese Lösung wird unter Rühren innerhalb 4 Std. eine zuvor aus 3 430 g Methacrylsäuremethylester, 70 g Itaconsäure, 16,8 g des oben genannten Emulgators, 1,05 g des oben genannten Initiators und 2 119 g dest. Wasser hergestellte Emulsion bei 80 °C zugetropft. Nach Zulaufende werden 0,35 g Ammoniumperoxydisulfat zugegeben und der Ansatz 2 Std. bei 80 °C gehalten. Nach Abkühlen auf Zimmertemperatur wird der Ansatz über ein feinmaschiges Siebgewebe aus rostfreiem Stahl filtriert. Die Dispersion hat einen Feststoffgehalt von ca. 50 %.

2. Trocknung der Polymerisat-Dispersion

Die Dispersion wird in eine Sprühtrocknungsanlage, die mit einer schnellrotierenden Zerstäuberscheibe (18 000 UpM) ausgerüstet ist, im Gleichstrom mit Luft von ca. 150 °C eingeleitet. Das Mengenverhältnis Dispersion/Luft ist so eingestellt, daß das Sprühgut die Anlage bei einer Luftaustrittstemperatur von ca. 65 °C in Form eines trockenen, feinteiligen, weißen bis durchscheinenden, keine glasigen Bestandteile enthaltenden Pulvers verläßt. Das Pulver hat ein $nsp/_c$, gemessen in $CHCl_3$, von 322 ($cm^3 \cdot g^{-1}$, 20 °C).

3. Herstellung des Plastisols und Anwendung

20 Teile des Acrylpolymeren nach der Herstellungsvorschrift (Beispiel 1) wurden mit

30 Teile Benzyloctylphthalat (Santicizer 261, Produkt der Fa. Monsanto) und

35 Teile Kreide (Ulmer Weiß BS Produkt der Ulmer Füllstoff-Werke, 7906 Blaustein)

15 Teile Microcalcilin OFB (Kreide) werden über den Walzenstuhl bei Raumtemperatur einmal gegeben. Es resultiert ein gefülltes Plastisol, dessen Viskosität bei 30 °C über 3 Wochen um den Faktor 3,5 ansteigt: In üblicher Weise aufgetragen und eingebrannt auf kataphoretisch grundierten Blechen bei Temperaturen 130° (20') oder 180° (10') ergibt gute Haftfestigkeit der Filme. Bei Zugscherverklebungen treten stets Brüche im Film auf.

**Patentansprüche**

1. Plastisole aus Copolymerisaten des Methylmethacrylats mit einer Glastemperatur Tg oberhalb 35 °C mit einem Polymerisationsgrad von mehr als 400 und einer durchschnittlichen Korngröße von 0,1 bis 500 µm, die auf 100 Gewichtsteile des Copolymerisats 100 bis 1 000 Gewichtsteile eines mit den Copolymerisaten verträglichen, organischen Weichmachers enthalten und gegebenenfalls bis zu 700 Gewichtsteilen inerter Füllstoffe, sowie gegebenenfalls weiterer üblicher Zusätze, mit verbesserter Haftfähigkeit, dadurch gekennzeichnet, daß das Copolymerisat aus Methylmethacrylat und 0,1 bis 10 Gew.-% Itaconsäure oder deren Anhydrid aufgebaut ist.

2. Plastisole gemäß Anspruch 1, dadurch gekennzeichnet, daß das Copolymerisat aus 0,5 bis zu 7,5 Gew.-% Itaconsäure oder deren Anhydrid aufgebaut ist.

3. Plastisole gemäß Anspruch 1, dadurch gekennzeichnet, daß als Weichmacher Benzyloctylphthalat Anwendung findet.

4. Verwendung der Plastisole gemäß den Ansprüchen 1 bis 3, zur Beschichtung von Kataphoreseblechen.

**Claims**

1. Plastisols obtained from copolymers of methyl methacrylate having a glass temperature Tg above 35 °C with a degree of polymerisation of more than 400 and an average particle size of from 0.1 to 500 microns which contain, for every 100 parts by weight of the copolymer, 100 to 1 000 parts by weight of an organic plasticiser which is compatible with the copolymers and optionally up to 700 parts by weight of inert fillers, and optionally other conventional additives, having improved adhesive properties, characterised in that the copolymer is synthesised from methyl methacrylate and 0.1 to 10 % by weight of itaconic acid or the anhydride thereof.

2. Plastisols as claimed in claim 1, characterised in that the copolymer is synthesised from 0.5 to 7.5 % by weight of itaconic acid or the anhydride thereof.

3. Plastisols as claimed in claim 1, characterised in that benzyl-octylphthalate is used as plasticiser.

4. Use of the plastisoles as claimed in claims 1 to 3, for coating cataphoresis sheet metal.

**Revendications**

1. Plastisols à base de copolymères du méthacrylate de méthyle ayant une température de verre Tg supérieure à 35 °C, un degré de polymérisation de plus de 400 et une grosseur moyenne de grain de 0,1 à 500 µm, contenant, pour 100 parties en poids du copolymère, 100 à 1 000 parties en poids d'un plastifiant organique compatible avec le copolymère et éventuellement jusqu'à 700 parties en poids de charges inertes, ainsi que, le cas échéant, d'autres additifs usuels, et possédant une adhésivité améliorée, caractérisés en ce que le copolymère est composé de méthacrylate de méthyle et de 0,1 à 10 % en poids d'acide itaconique ou de son anhydride.

2. Plastisols selon la revendication 1, caractérisés en ce que le copolymère est composé, pour 0,5 à 7,5 % en poids, d'acide itaconique ou de son anhydride.

3. Plastisols selon la revendication 1, caractérisés en ce que le phtalate de benzyloctyle est utilisé comme plastifiant.

4. Utilisation des plastisols selon l'une quelconque des revendications 1 à 3 pour l'enduction de tôles traitées par cataphorèse.